# FASCICULE DE BREVET EUROPEEN

(11) **EP 0 964 363 B1**
(45) Date de publication et mention de la délivrance du brevet: **18.08.2004**
(21) Numéro de dépôt: 99401310.0
(22) Date de dépôt: 01.06.1999
(51) Int. Cl.: G06T 7/20

(54) **Procédé de séparation des composantes dynamique et statique d'une suite d'images**
Verfahren zum Trennen von dynamischen und statischen Komponenten einer Bildsequenz
Process for separating image sequence static and dynamic components

(30) Priorité: 08.06.1998 FR 9807182
(43) Date de publication de la demande: 15.12.1999
(73) Titulaire: Thales, 75008 Paris (FR)
(72) Inventeur: Barbaresco, Frédéric, 94117 Arcueil Cedex (FR); Legoupil, Samuel, 94117 Arcueil Cedex (FR); Monnier, Bernard, 94117 Arcueil Cedex (FR)
(74) Mandataire: Chaverneff, Vladimir

(56) Documents cités:
- EP-A- 0 637 027
- GB-A- 2 282 294

## Description

La présente invention se rapporte à un procédé de séparation des composantes dynamique et statique d'une suite d'images.

En technique de traitement d'images, lorsque l'on obtient, pour un phénomène évolutif (par exemple un phénomène météorologique ou biologique), une série d'images, prises par un capteur approprié (radar météorologique, appareil radiographique, ...) à des instants différents, mais dans les mêmes conditions (repère fixe), ces images peuvent comporter des composantes dynamiques, caractéristiques de l'évolution du phénomène en question, et des composantes statiques (n'évoluant pas spatialement, ou tout au moins évoluant spatialement à une vitesse de déplacement négligeable par rapport à celle des composantes dynamiques). Ces composantes statiques sont, par exemple, dans le cas de la météorologie, des éléments du relief terrestre (montagnes, bâtiments, ...), et dans le cas de la biologie, des éléments du squelette ou des objets fixes pouvant être disposés sur le trajet des rayons X, ..... Dans la plupart des cas, la composante dynamique est la seule présentant un intérêt dans les images, alors que la composante statique devrait pouvoir être éliminée, parce que non seulement elle ne présente aucun intérêt, mais peut également présenter une gêne importante dans l'observation de la composante dynamique avec laquelle elle peut se confondre, et peut même gêner cette observation. Toutefois, dans certaines applications, c'est la composante statique qui peut présenter un intérêt, ou bien même ces deux composantes peuvent présenter chacune un intérêt, auquel cas il peut être nécessaire de les observer séparément.

Par conséquent, dans de tels cas, il faut pouvoir séparer ces deux composantes, et, le cas échéant, en éliminer une. On connaît des procédés d'élimination de « fouillis» d'images radar basés sur différents principes, mais ils ne permettent pas de réaliser une distinction suffisamment précise entre les composantes dynamique et statique des images obtenues, en particulier lorsque ces deux composantes se confondent.

La présente invention a pour objet un procédé permettant de séparer, dans une suite d'images relatives à des phénomènes évolutifs et relevées au cours du temps dans les mêmes conditions, la composante statique de la composante dynamique, pour pouvoir, le cas échéant, éliminer l'une d'elles, et ce, de la façon la plus précise et fiable possible.

Une demande de brevet GB 2 282 294 décrit un procédé de détection d'objets mobiles dans une suite d'images. L'invention a pour objet un procédé tel que décrit par la revendication 1.

Selon divers aspects du procédé de l'invention, un premier critère possible de classement de l'intensité des pixels est leur minimum. Un deuxième critère possible de classement est le rapport σ/m de la variation d'intensité des pixels, σ étant leur écart-type et m leur moyenne. Un troisième critère possible de classement est le gradient spatial des intensités des pixels, que l'on intègre temporellement sur la séquence d'images, ce critère servant de critère d'arrêt à une méthode de contour actif géodésique, comme connu en soi d'après le rapport de recherche n° 1.075 de 1989 de L. COHEN, de l'INRIA, intitulé « On active contours models ».

La présente invention sera mieux comprise à la lecture de la description détaillée de plusieurs modes de mise en oeuvre, pris à titre d'exemples non limitatifs et illustrés par le dessin annexé, sur lequel :
- la figure 1 est un diagramme d'un exemple de variations d'intensité d'un pixel relatif à un fouillis dynamique et à un fouillis statique,
- la figure 2 est une vue schématique de deux images pouvant être relevées à des instants différents par un radar météorologique et montrant un fouillis statique pouvant être masqué par un fouillis dynamique,
- la figure 3 est un histogramme modélisé montrant la répartition des rapports individuels σ/m des différents pixels d'une image comportant du fouillis statique et du fouillis dynamique, dans laquelle le fouillis statique est partiellement masqué par le fouillis dynamique, et
- la figure 4 est un histogramme réel semblable à celui de la figure 3.
La présente invention est décrite ci-dessous en référence à un radar météorologique, pour l'élimination du fouillis statique, mais il est bien entendu qu'elle n'est pas limitée à cette seule application, et qu'elle peut être mise en oeuvre pour séparer dans les images de diverses provenances (images médicales, images de caméras opérant dans le domaine visible ou infrarouge, images de capteurs ultrasoniques, ...) les composantes statique et dynamique, afin d'exploiter l'une ou l'autre de ces composantes, ou même les deux, mais séparément.

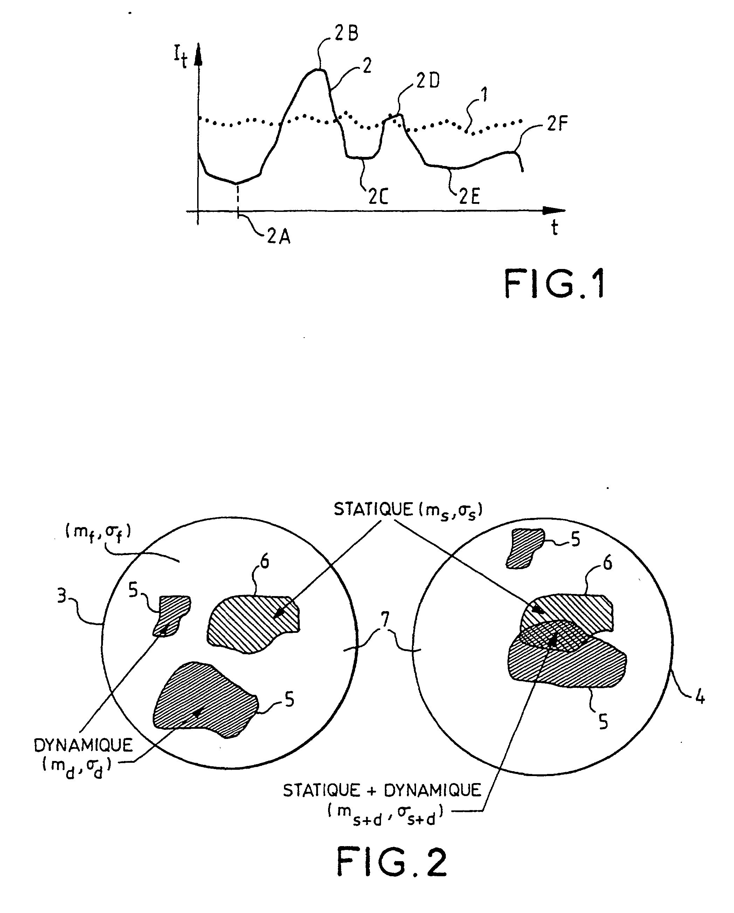

Sur le diagramme de la figure 1, on a représenté un exemple de variation dans le temps de l'intensité d'un pixel d'une image, selon que ce pixel appartient au «fouillis» statique (courbe 1) ou au «fouillis» dynamique (courbe 2). Dans cet exemple, et par la suite, puisqu'il s'agit d'images obtenues par un radar météorologique, les composantes statique et dynamique sont qualifiées de «fouillis» statique et dynamique respectivement, mais comme précisé ci-dessus, ces composantes peuvent être autre chose que du fouillis, par exemple des images d'objets fixes et d'objets mobiles, respectivement. Dans le cas présent, le fouillis statique comporte des échos d'obstacles fixes (montagnes, constructions, ...), tandis que le fouillis dynamique se rapporte essentiellement aux masses nuageuses.

Sur la figure 1, on constate que la courbe 1 est proche d'une ligne horizontale autour de laquelle elle fluctue, ces fluctuations étant dues à des fluctuations habituelles du niveau des échos radar sur des obstacles fixes. Par contre, la courbe 2 présente de fortes variations d'amplitude, dues à des passages de masses nuageuses à l'endroit du pixel considéré. Les plus fortes amplitudes relevées pour ce pixel correspondent au passage de masses nuageuses denses, et les autres à des masses moins denses (pour lesquelles l'écho est plus faible), ou à l'absence de composante dynamique.

Sur la figure 2, on a schématisé deux images 3, 4 de radar météorologique. Dans ces images, les composantes dynamiques ont été référencées 5, et la composante statique 6, et le fond de l'image 7. Dans le cas de l'image 3, les composantes statique et dynamiques sont toutes distinctes, alors que pour l'image 4, l'une des composantes dynamiques recouvre partiellement la composante statique.

Une première façon selon l'invention, pour séparer les composantes statiques des composantes dynamiques est de déterminer un masque des composantes statiques pour une suite d'images obtenues successivement dans le temps, pour chaque pixel, le minimum de son intensité, puis de créer une image de ces minima et de la seuiller ensuite. Pour les pixels sur lesquels se déplace du fouillis dynamique, et pour des images prises pendant un laps de temps suffisamment long pour que ce fouillis dynamique s'approche de ces pixels, les recouvre et les quitte, l'intensité de ces pixels varie dans de très larges proportions, comme on le voit d'après la courbe 2 de la figure 1. Cette intensité est minimale - en 2A - (elle correspond au bruit de fond des images radar sans écho) lorsque ces pixels ne correspondent ni au fouillis statique, ni au fouillis dynamique, et elle est maximale (2B) lorsque ces pixels sont recouverts par le fouillis dynamique, ou lorsqu'il y a superposition de fouillis statique et de fouillis dynamique. Ce maximum est d'autant plus élevé que ce fouillis est dense. On notera que la courbe 2 de la figure 1 comporte d'autres minima (2C, 2E) moins faibles que 2A, et d'autres maxima (2D, 2F) plus faibles que 2B, qui correspondent à des variations locales de densité du fouillis dynamique. Dans d'autres cas, (relief 6 de la figure 2), des pixels, correspondant à du fouillis statique, peuvent être momentanément recouverts par du fouillis dynamique. Dans ces cas, les minima correspondants sont sensiblement égaux à l'amplitude moyenne du fouillis statique, c'est-à-dire nettement supérieurs au plus petit minimum (2A) de la courbe 2.

Par conséquent, en présence de fouillis dynamique, pour savoir à quelle sorte de fouillis correspond un pixel, il faut disposer d'un nombre suffisant d'images successives (plusieurs dizaines par exemple), l'intervalle de temps entre la première et la dernière étant suffisamment long (plusieurs minutes par exemple) pour que les formations nuageuses aient le temps de parcourir un grand champ des images, et déterminer le plus faible minimum d'intensité de chaque pixel. L'image des masques de fouillis statiques s'obtient dès la première image s'il n'y a pas de fouillis dnamique puisque seul le fouillis statique est présent, il suffit de seuiller cette image. Si l'intensité d'un pixel présente un faible minimum et ne varie pratiquement pas au cours du temps, ce pixel appartient au fond de l'image (il ne correspond ni à un fouillis statique ni à un fouillis dynamique). Si un pixel présente un tel minimum, mais si son intensité varie fortement au cours du temps, le fouillis dynamique passe par ce pixel lorsque son intensité devient supérieure à ce minimum. Si le minimum d'intensité d'un pixel est nettement supérieur au précédent, et si cette intensité ne fluctue que faiblement au-dessus de ce minimum, ce pixel appartient à du fouillis statique. Si, enfin, le minimum d'intensité d'un pixel est relativement élevé, et si son intensité augmente nettement au cours du temps, ce pixel appartient également à du fouillis statique, mais il s'y superpose du fouillis dynamique lorsque son intensité augmente nettement. Il est évident qu'il s'agit d'une fonction qui s'affine au cours du temps.

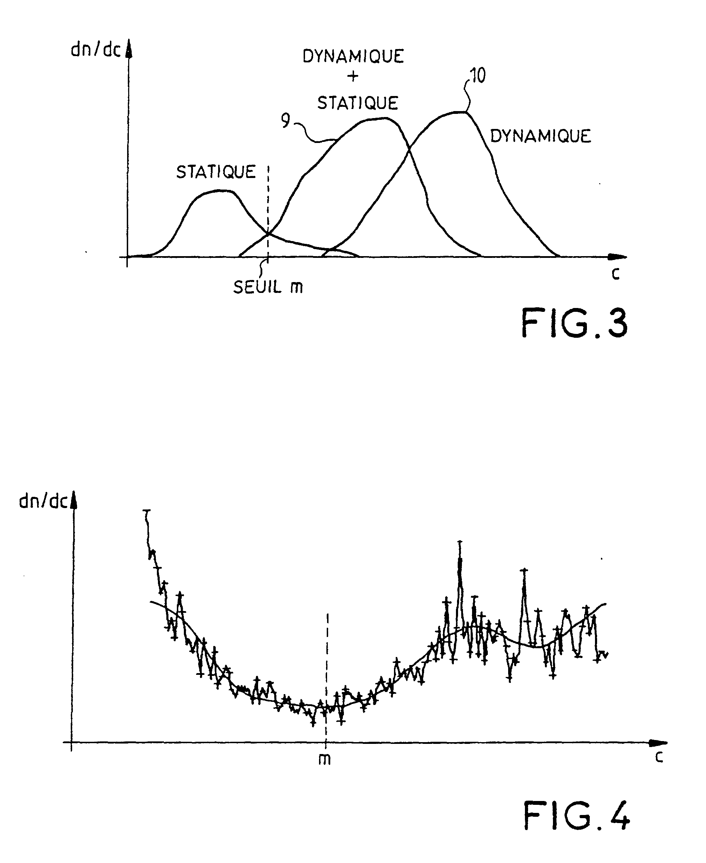

Selon un deuxième aspect du procédé de l'invention, on considère le rapport c = σ/m de chaque pixel d'une image (ou tout au moins de chaque pixel d'une zone d'intérêt de cette image) σ étant l'écart type temporel et m la moyenne temporelle de l'intensité du pixel considéré. On pourrait également tenir compte des variations spatiales du pixel en considérant les valeurs des voisins et les intégrer dans les calculs de moyenne et écart type (4 ou 8 voisins). La raison en est que lorsque l'on établit l'histogramme d'une image, telle que l'image 4 de la figure 2, faisant partie d'une séquence d'images espacées dans le temps (comportant plusieurs dizaines d'images), cet histogramme étant établi en fonction de c = σ/m, avec l'hypothèse que les valeurs de σ et m associées aux différentes composantes de l'image (statique, dynamique et fond d'image) sont en nombre suffisant (supérieur à 10), on obtient des courbes telles que les courbes 8, 9, 10 représentées en figure 3, qui ont des allures sensiblement gaussiennes. Ces courbes 8 à 10 correspondent respectivement à la composante statique, à la combinaison statique + dynamique, et à la composante dynamique. Ceci se comprend aisément, puisque la composante statique présente de faibles fluctuations autour de sa valeur moyenne (donc son rapport σ/m est faible), alors que la composante dynamique présente de fortes variations autour de sa valeur moyenne (qui est plus petite que la valeur moyenne de la composante statique), ce qui fait que son rapport σ/m est plus élevé que celui de la composante statique. Dans le cas d'une combinaison statique + dynamique, les variations autour de la valeur moyenne sont sensiblement les mêmes que pour la composante dynamique seule, mais la valeur moyenne de cette combinaison est plus élevée que celle de la composante dynamique seule (du fait de l'addition de la valeur moyenne de la composante statique). Il en résulte que la courbe 9 a sensiblement la même allure que le courbe 10, mais que son maximum est situé entre ceux des courbes 8 et 10.

On déduit de l'analyse des courbes 8 à 10 de la figure 3 que la détection des fouillis statiques se fera à l'aide de l'histogramme du rapport c = σ/m pour l'ensemble des points de l'image appartenant à ladite séquence d'images.

On a représenté en figure 4 un histogramme similaire à celui de la figure 3, mais plus proche de la réalité (avec du bruit de fond). Cet histogramme a été tronqué aux 150 premières valeurs de C pour des raisons de simplification (le premier minimum, correspondant au minimum m de la figure 3, est situé nettement avant la 150° valeur de C), avec un seuillage automatique d'intensité à une valeur s = m_{f} + 3. σf (m_{f} et σ_{f} étant la moyenne et l'écart-type relatifs au fond d'image). Du fait que l'histogramme ainsi obtenu présente de fortes irrégularités, il faut le lisser afin d'en extraire la valeur la plus précise d'un minimum significatif (m), un tel minimum correspondant à la délimitation entre les composantes statique et dynamique. Ce lissage peut être réalisé par un filtrage passe-bas. Pour déterminer le minimum, on peut par exemple prendre les 128 premières valeurs de c, faire une transformée de Fourier inverse avec ces valeurs, conserver les 8 valeurs « centrales » de cette transformée, faire une transformée de Fourier directe à partir de ces 8 valeurs, le minimum apparaissant plus nettement sur le résultat de cette transformée directe.

On peut procéder de façon analogue pour séparer la composante dynamique de l'ensemble statique + dynamique (respectivement courbes 10 et 9 de la figure 3), en prenant les dernières valeurs de c.

De façon avantageuse, on confère des attributs à des zones de pixels pour obtenir une fonction de caractérisation et/ou d'identification des composantes statiques et/ou dynamiques des images traitées.

## Revendications

1. Procédé de séparation des composantes statique et dynamique d'une séquence d'images, temporellement espacées et prises dans les mêmes conditions, **caractérisé en ce qu'**il comporte les étapes suivantes :
- relever l'intensité de chacun des pixels d'au moins une zone de cette séquence, pour chaque image, en considérant à chaque fois les mêmes pixels d'une image à l'autre ;
- puis, à l'aide de critères relatifs au classement de l'amplitude des variations de l'intensité des pixels, à discriminer ceux dont l'amplitude des variations de l'intensité est plus faible que celle des autres au long de la séquence, les premiers appartenant à la composante statique des images.

2. Procédé selon la revendication 1, **caractérisé en ce que** les pixels sont en classés en fonction du minimum de cette intensité.

3. Procédé selon la revendication 1, **caractérisé en ce que** les pixels sont classés en fonction du rapport σ/m de la variation de leur intensité, σ étant leur écart-type et m leur moyenne.

4. Procédé selon la revendication 1, **caractérisé en ce que** les pixels sont classés en fonction du gradient spatial des intensités des pixels, que l'on intègre temporellement sur la séquence d'images, ce critère servant de critère d'arrêt à une méthode de contour actif géodésique.

5. Procédé selon l'une des revendications précédentes, **caractérisé par le fait que** l'on confère des attributs à des zones de pixels pour obtenir une fonction de caractérisation et/ou d'identification des composantes statiques et/ou dynamiques des images traitées.

## Claims

1. Process for the separation of static and dynamic components of a sequence of images separated in time and taken under the same conditions, **characterized in that** it comprises the following steps:
- recording the intensity of each pixel in at least one area in this sequence, for each image, and each time considering the same pixels in the different images;
- then, using pixel intensity change sort criteria, in discriminating those pixels for which the intensity changes less than for others as the sequence progresses, the former pixels belonging to the static component of the images.

2. Process according to Claim 1, **characterized in that** the pixel intensity sort criterion is the minimum value of this intensity.

3. Process according to Claim 1, **characterized in that** the pixel intensity sort criterion is the σ/m ratio of the variation of their intensity, where σ is their standard deviation and m is their average.

4. Process according to Claim 1, **characterized in that** the pixel intensity sort criterion is the spatial gradient of the intensities of the pixels, that are integrated in time over the sequence of images, this criterion being used as a stop criterion for an active geodetic contour method.

5. Process according to one of the preceding claims, **characterized by** the fact that attributes are assigned to pixel areas to obtain a characterizing and/or identification function for static and/or dynamic components of the processed images.

## Patentansprüche

1. Verfahren zum Trennen statischer und dynamischer Komponenten einer Abfolge von Bildern, die zeitlich beabstandet und unter den gleichen Bedingungen genommen werden, **dadurch gekennzeichnet, dass** es die folgenden Schritte umfasst:
- Messen der Intensität jedes der Bildpunkte mindestens einer Zone dieser Abfolge für jedes Bild, wobei jedes Mal, von einem Bild zum anderen, die gleichen Bildpunkte betrachtet werden;
- danach, mit Hilfe von Kriterien, die sich auf die Einstufung der Amplitude der Schwankungen der Intensität der Bildpunkte beziehen, Unterscheiden derer, deren Amplitude der Schwankungen der Intensität geringer ist als die der anderen im Laufe der Abfolge, wobei die ersten zur statischen Komponente der Bilder gehören.

2. Verfahren nach Anspruch 1, **dadurch gekennzeichnet, dass** die Bildpunkte in Abhängigkeit vom Minimum dieser Intensität klassiert sind.

3. Verfahren nach Anspruch 1, **dadurch gekennzeichnet, dass** die Bildpunkte in Abhängigkeit vom Verhältnis σ/m der Schwankung ihrer Intensität klassiert sind, wobei σ ihr Standardabstand und m ihr Durchschnitt ist.

4. Verfahren nach Anspruch 1, **dadurch gekennzeichnet, dass** die Bildpunkte in Abhängigkeit vom räumlichen Gefälle der Intensitäten der Bildpunkte klassiert sind, das man vorübergehend auf der Abfolge von Bildern integriert, wobei dieses Kriterium als Stoppkriterium für eine aktive geodätische Konturmethode dient.

5. Verfahren nach einem der vorhergehenden Ansprüche, **dadurch gekennzeichnet, dass** man den Zonen von Bildpunkten Attribute verleiht, um eine Charakterisierungs- und/oder Identifikationsfunktion der statischen und/oder dynamischen Komponenten der verarbeiteten Bilder zu erzielen.
